# EUROPEAN PATENT APPLICATION

(11) **EP 2 955 308 A1**
(43) Date of publication of application: **16.12.2015**
(21) Application number: 15171255.1
(22) Date of filing: 09.06.2015
(51) Int. Cl.: E05F 15/00, E06B 9/00, H02P 3/14, H02P 7/00, H02P 6/18

(54) **IMPROVED CONTROL UNIT**

(30) Priority: 10.06.2014 IT IT20140080
(71) Applicant: NICE S.P.A., 31046 Oderzo (TV) (IT)
(72) Inventor: BATTISTUZZI, ANGELO, 31046 ODERZO (TV) (IT); CUZZIOL, FULVIO, 31046 ODERZO (TV) (IT)
(74) Representative: Citron, Massimiliano

(57) **Abstract**

A control unit is described for driving an electric motor (M1) adapted to move a movable barrier such as a gate. To improve the barrier control during braking, the control unit comprises a H-bridge topology PWM-modulated switching stage (M4-M5, M7-M8) able to power the electric motor, a feedback loop to adjust the speed of the barrier, and an electrical energy storage element (C2) which is placed in parallel to the H-bridge and is adapted to store the energy coming from the motor during the braking action of the barrier so as to limit over-voltages across the H-bridge.

## Description

The invention relates in general to an electronic control unit for controlling movable barriers actuated by an electric motor, such as sliding or swing gates here taken as an example.

Modern gates are moved by an electric motor driven by an electronic control unit.

The control and management of the gate is particularly difficult during the braking phase, when the kinetic energy of the gate (minus a small dispersed part due to friction) must be dissipated in the control unit, in form of electric energy, where it arrives from the cables connected to the motor. To this aim there are different circuit topologies. Very crudely the braking action can be achieved by shorting the motor, but one gets a violent stop which is commercially unacceptable, or in parallel to the motor a constant dissipation resistor is inserted, that not only determines a braking stroke dependent on the weight of the gate and its speed, but also - therefore - makes the reaction/stop to unforeseen obstacles uncertain and/or inadequate.

In some more sophisticated versions, a small motor is controlled by an H-bridge switching stage, which is powered by a battery and is open-loop PWM-modulated. The DC bus is voltage stabilized by the clamping effect of one or more zeners, internal or external to the power semiconductors of the bridge. This system has big problems of internal dissipation of the electrical energy created by the kinetic energy of the gate and is therefore unusable for medium-high size motors (gate speed ≥ 60 cm/s) and/or for heavy gates (over 400 kg). In addition the braking performance is poor, primarily established by the mechanical variables of the gate (friction) and by the kinematic chain of the actuator.

Therefore it is desired to improve this state of the art, in particular by producing a control unit of the aforementioned type which:
gives better performance in the braking control of the gate, and/or
is usable for motors of all sizes, and/or
has faster intervention response in case of an obstacle against the gate, and/or
eliminates surges in the switching power stage, and/or recovers the kinetic energy of the braked gate.

This can be achieved with a control unit according to claim 1. Further advantageous variants are contained in the dependent claims.

It is proposed a control unit for driving an electric motor adapted to move a movable barrier such as a gate, comprising
a H-bridge topology PWM-modulated switching stage (M4-M5, M7-M8) able to power the electric motor;
a feedback loop to adjust the speed of the barrier;
an electrical energy storage element (C2) which is placed in parallel to the H-bridge and is adapted to store the energy coming from the motor during the braking action of the barrier so as to limit over-voltages across the H-bridge.

The use of feedback allows to improve (speed up) a lot the dynamic response of the barrier, with extreme shortening of the braking distance in case of an obstacle and/or accurate tracking of a set deceleration ramp (which is impossible with the known open loops).

When the gate has to brake quickly, the PWM modulation of the bridge changes, thereby changing the duty-cycle to reduce the current circulating in the motor and increasing the switching periods in which the motor injects high current in the DC bus. The storage element minimizes voltage surges and allows retrieving and/or accumulating excess energy during the braking phase. The benefit and the effect is fundamental when the H-bridge is powered by the mains via rectifier diodes, because then the reverse current of the motor (up to 50 A) can not flow in the diodes and would destroy by over-voltage the power devices.

As preferred embodiments for the storage element, to be used also in combination, one can employ:
- an electrical capacitor, which not only serves to stabilize the DC bus, but its sizing according to the invention will also prevent voltage surges;
- a battery, wherein one takes advantage of its low internal impedance to limit voltage surges.

The control unit may also comprise a protection circuit adapted to create a low impedance path between two terminals of the storage element. in order to dissipate excess energy and/or prevent damage if the excess energy has too high a peak.

The control unit may also comprise a detector circuit, included in the feedback loop, to detect the voltage across the motor and a driver circuit (e.g. a programmable circuit like a microprocessor) to drive periodically the H-bridge into a high impedance state for each component of its two legs, so as to isolate the motor from the power-supply. The measurement of the voltage on the motor gives a signal proportional to the angular speed of its shaft, without having to use an encoder or an external tachometer. Particularly, the driver circuit may be configured to stop the PWM during a reading period of the voltage across the motor. The interruption of the PWM can be periodic, with a constant period or, advantageously, a variable period. Indeed, it is worthwhile to stop the PWM in inverse proportion to the motor's angular speed: the slower the motor, the more the PWM is stopped, with the advantage of limiting the dissipation on the H-bridge and maximizing the precision of control in the stop or deceleration intervals (e.g. against or because of an obstacle).

It is also proposed, with the same advantages of the control unit, a control method of a control unit adapted to drive an electric motor used to move a movable barrier such as a gate, comprising the step of:
accumulating the excess energy coming from the motor during the braking of the barrier in order to limit over-voltages inside the control unit. The control unit may comprise a stage as that described above, and in this case the over-voltages at the terminals of the bridge are avoided or limited.

The method may have the steps of:
- creating a low impedance path between two terminals of a storage element for the excess energy, in order to dissipate excess energy and/or avoid damage if the excess energy has too high a peak; and/or
- isolating the motor from its power supply, e.g. by interrupting the PWM of the H-bridge (bringing his legs into a high impedance state), and detecting the open-circuit voltage across the motor to determine the speed of its shaft, and indirectly that of the barrier; and/or
- isolating the motor from its power supply, without altering the PWM, during a period of reading/sensing the voltage across the motor. Advantageously, the insulation from the power supply or interruption of the PWM can be regular or variable, in particular the switching-off of the components of the H-bridge can take place with a frequency being the greater the more slowly the motor is revolving.

The method and the control unit are also applicable to other automatic devices, such as e.g. road barriers where the inertia of the rod must be controlled in a gentle way to avoid jolts, or with asynchronous motors by modifying the H-bridge, and introducing an encoder for the number of revolutions of the motor.

The following description relates to a preferred embodiment of control unit for a gate and further highlights its advantages, by reference to the accompanying drawings in which:
Fig. 1 shows a simplified electric diagram of the control unit;
Fig. 2 shows an experimental oscilloscope data capture of some waveforms in the control unit;
Fig. 3 shows two waveforms with expanded time scale, relative to the panel R1 in Fig. 2;
Fig. 4 shows an experimental oscilloscope data capture of some waveforms in the control unit;
Fig. 5 shows two waveforms with expanded time scale, relative to the panel R2 in Fig. 4;

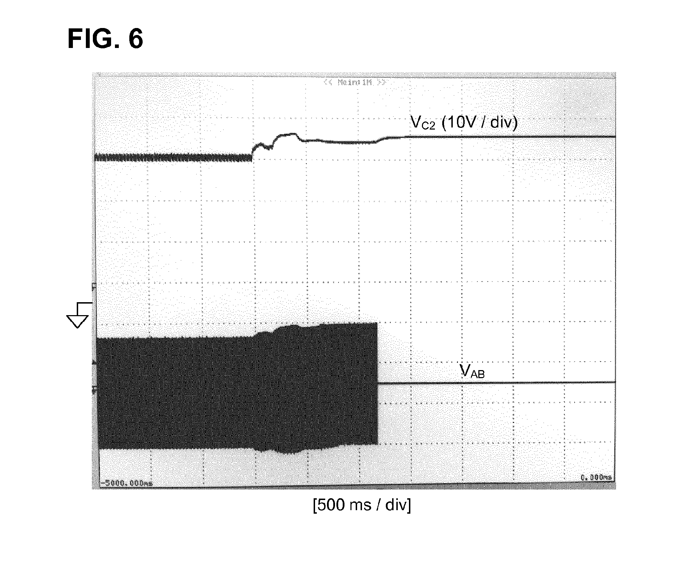

Fig. 6 shows other experimental oscilloscope data capture of waveforms in the control unit.

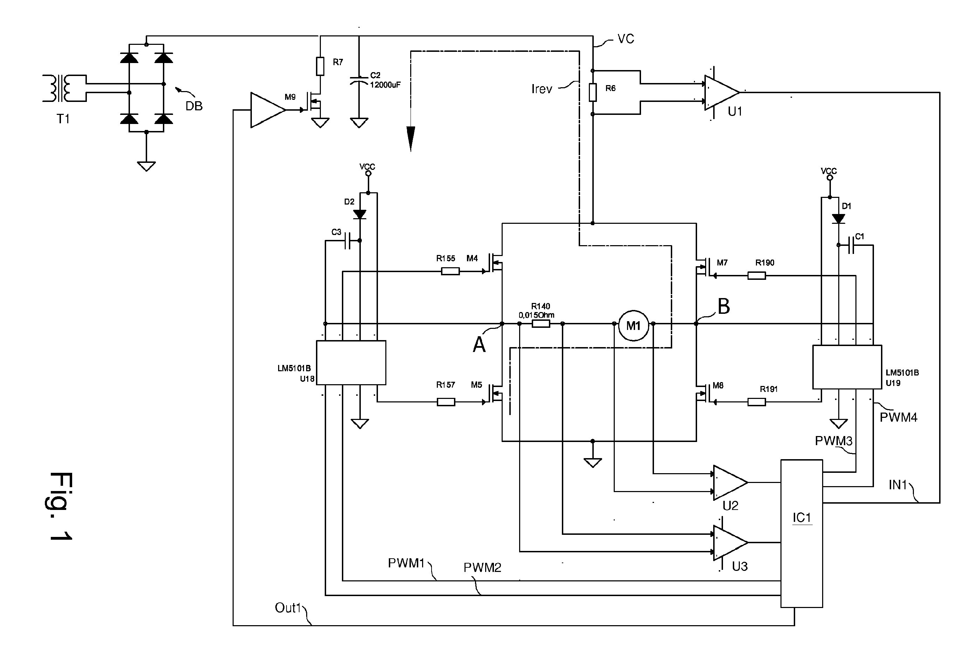

We refer now to Fig. 1, which schematically shows the power and control stage of the control unit.

The terminals of a switching H-bridge, formed by four mosfets M4, M5, M7 and M8, are powered through a DC bus, indicated by and having voltage VC, from the mains via a transformer T1 and a rectifier diode-bridge DB.

The H-bridge is driven by two driver chips U18, U19 (e.g. a known chip of the LM5101 series) with PWM modulation generated by a microprocessor IC1 and transmitted through lines PWM1-PWM4. Each common node of the mosfets M4-M5, M7-M8 (the recirculation diodes in parallel thereto are not shown) that make up the two legs of the bridge, see nodes A and B, alternately is switched to the bus voltage VC or to zero voltage.

Between the nodes A, B is connected the series of a DC electric motor M1, which serves to move a gate (not shown), and a sensing resistor R140.

The voltage across the motor M1 is detected by a differential amplifier U2 whose output is led to the microprocessor IC1's input.

The voltage across the resistor R140 is detected by a differential amplifier U3 whose output is led to the microprocessor IC1's input.

In series with the H-bridge there is a current sensing resistor R6, whose voltage is detected by a differential amplifier U1 connected to an input IN1 of the microprocessor IC1.

The bus voltage VC is leveled by a capacitor C2, set in parallel to the H-bridge, which has in parallel the series of a mosfet M9 and a dissipation (bleeder) resistor R7. The gate of the mosfet M9 is controlled by an output Out1 of the microprocessor IC1.

The integrated circuits U2, U3, the control in the microprocessor IC1 and the driver stages on the H-bridge form a control feedback loop for the current in the motor M1 and the speed of its rotating shaft.

### NORMAL OPERATION

### 1. Motor powering phase.

When one wants to move the gate, the microprocessor IC1 determines a duty-cycle in the PWM different from 50%, thereby forcing across the nodes A, B an average voltage (called voltage V_{AB}) of the correct value and polarity. This causes an average current I_{M} in the motor M1 different from zero, and the motor M1 is activated in the desired direction.

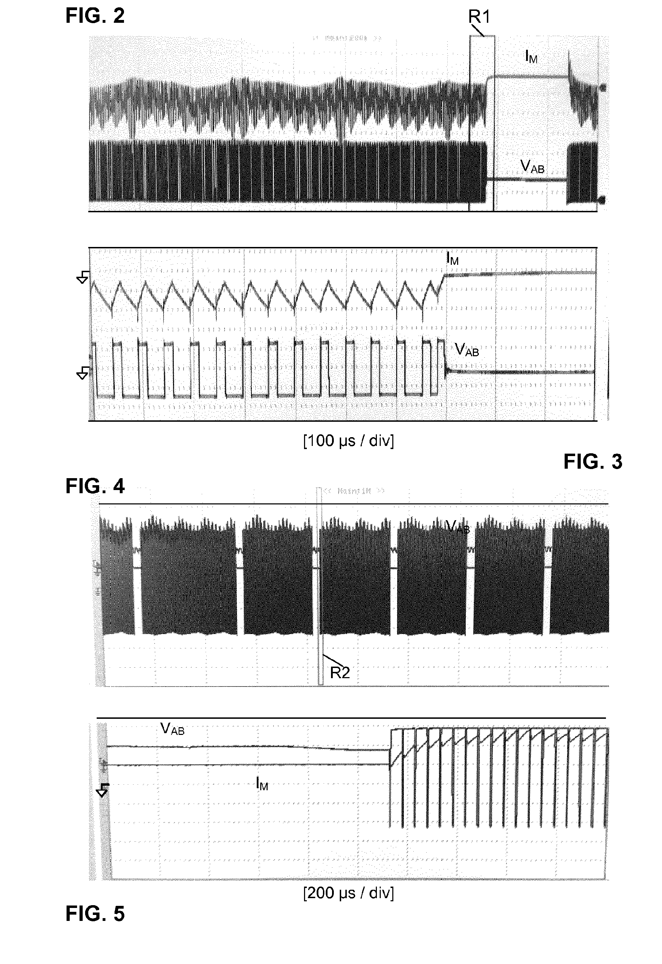

The waveforms V_{AB} and I_{M} in this operation phase are visible in the left part of Fig. 2.

### 2. Motor voltage reading phase.

To avoid using an optical or mechanical encoder on the shaft of the motor M 1, the control unit exploits the reading of the electromotive force (EMF) induced by the motor M1 when by inertia it continues to rotate with zero current I_{M} and zero supply voltage V_{AB}.

The induced EMF, detected by the amplifier U2, it is proportional to the speed of the motor M1. The output of amplifier U3 instead gives a signal proportional to the torque.

Periodically (see Fig. 2) the PWM modulation of the H-bridge is suspended by the microprocessor IC1 (all four mosfets M4-M5, M7-M8 are turned off). The current I_{M} after a brief transient becomes zero (Fig. 2, right side) and the voltage V_{AB} coincides with the EMF.

Fig. 3, upper part, shows in full the periodic interruptions in the modulation of the voltage V_{AB}. The zoomed box R2, Fig. 3 in the lower left, clearly shows a positive EMF compared to a null I_{M}.

The EMF thus acquired is processed by the microprocessor IC1 to calculate the actual gate speed and determine, e.g. with a PID algorithm, the duty-cycle in the next switching period, highlighted in Fig. 3, bottom right. In particular, the restart of the PWM and the return of the I_{M} to the steady-state value can be seen.

The control algorithm of the microprocessor IC1 can implement the classical architecture, but its parameters are advantageously adaptive. Since the working conditions are variable (inertia, friction, speed, etc. vary from application to application), without this particularity the system can be, for certain conditions, marginally stable.

Preferably, the switching frequency of the bridge is 20 KHz.

The PWM preferably stops to read the EMF with period Tv of 32 ms, but this period is not constant: as the motor M1 slows down also the updates become more frequent, namely 1/T_{V} increases. It is assumed that the motor M1 is under stress when it is slow, therefore e.g. the freewheeling diodes of the mosfets M4-M5, M7-M8 are stressed the most: by increasing 1/T_{V} they heat up less.

There is a trade-off in choosing the period Tv. The update of this variable should be very frequent because of the stability of the PID control, but this clashes with the dissipation of the diodes and the decreased efficiency that would occur in the motor M1. Having to stop the PWM to make the reading of the EMF is in itself circuitally painless, but it should be minded that the maximum obtainable duty-cycle will never reach 100%. If this introduced disturb is infrequent nothing happens, otherwise it results in loss of efficiency.

In the example the interruption occurs for 3 ms, every T_{V} = 32 ms extendable up to 64 ms. These T_{V} values are a good compromise between efficiency and position control (obtained by integration of the speed). In tune with this compromise, preferably T_{V} may vary from 20 ms to 50 ms.

The double control of the PWM and EMF can be implemented in the microprocessor IC1 with ordinary programming techniques. It should however be avoided in all cases that the H-bridge short-circuits, and control of the PWM must occur even when the microprocessor IC1 is being reset or powering up or off.

### OPERATION WHILE BRAKING

When the gate is braked (see Fig. 4), the duty-cycle of the PWM modulation is modified to decrease as early as possible the current in the motor M1. Once the motor M1 is stopped, for example the modulation in the H-bridge can be stopped (see waveform V_{AB} in Fig. 4, on the right).

During the braking transient the kinetic energy of the gate not dissipated into friction is discharged into the control unit, especially in the form of reverse over-current that circulates from the motor M1 to the DC bus. Fig. 1 shows such a current, labeled Iᵣₑᵥ, for a state of the H-bridge. The current Iᵣₑᵥ can only charge the capacitor C2 whose voltage V_{C2} rises (see Fig. 4, V_{C2}, at top and center).

By suitably sizing the capacitor C2 one can limit the positive voltage excursion. Also, the energy stored in capacitor C2 is reused later for re-powering the motor M1, so one can recover energy and increase the efficiency of the control unit.

Fig. 4 shows how the voltage V_{C2} was initially at 30 V, and after the braking transient becomes about 35 V.

The method by which C2 is dimensioned can be the following. The energy Eₘ accumulated by the gate can be estimated, and a part thereof ends up into friction of movement and in the kinematic chain. From measurements Eₘ = 10 J with heavy and very sliding gates.

The voltage and the current created by the motor are measured on a proper load by recording with an oscilloscope and then integrated over time upon the duration of the stop.

The differential energy E_{c} that the capacitor C2 can accumulate is ½.·C2·(V²ₘₐₓ - V²_{c}), where Vₘₐₓ is the over-voltage developed during the stop and V_{c} the supply voltage with maximum load or battery. E.g. for C2 = 12 000 µF, one can have Vₘₐₓ = 63 V, V_{c} = 24 V, and therefore E_{c} = 23.8 J > Eₘ.

If C2 is replaced by a battery, one should keep in mind the maximum current peak that can develop. The calculation is facilitated if one considers the stopping time of the gate that can be 100 ms or less.

### OPERATION WITH ANOMALY

An excessive current surge coming from the H-bridge can be detected through the amplifier U1. E.g. the microprocessor IC1 can react by stopping the PWM or disconnecting the connection of the bus VC from the transformer T1 via relays (not shown).

If the voltage of the capacitor C2 exceeds a certain threshold, the microprocessor IC1 can control the switching of the mosfet M9 to discharge to ground the excess energy.

The voltage V_{C2} is read with an A/D converter (not shown) of the microprocessor IC1. The same voltage is used to determine if and when there is a power failure.

## Claims

1. Control unit for driving an electric motor (M1) adapted to move a movable barrier such as a gate, comprising
a H-bridge topology PWM-modulated switching stage (M4-M5, M7-M8) able to power the electric motor;
a feedback loop to adjust the speed of the barrier;
an electrical energy storage element (C2) which is placed in parallel to the H-bridge and is adapted to store the energy coming from the motor during the braking action of the barrier so as to limit over-voltages across the H-bridge.

2. Unit according to claim 1, wherein the storage element comprises an electrical capacitor and/or a battery.

3. Unit according to claim 1 or 2, comprising a protection circuit (M9 R7) adapted to create a low impedance path between two terminals of the storage element.

4. Unit according to any one of the preceding claims, comprising a detector circuit (U2), included in the feedback loop, to detect the voltage across the motor and a driver circuit (IC1, U18, U19) to drive periodically the H-bridge in a high impedance state for each component of its two legs, so as to isolate the motor from the power-supply.

5. Unit according to claim 4, wherein the driver circuit is configured to interrupt the PWM modulation during a period for reading/sensing the voltage across the motor.

6. Unit according to claim 5, wherein the driver circuit is configured to interrupt the PWM modulation in inverse proportion to the angular speed of the motor.

7. Control method of a control unit adapted to drive an electric motor (M1) used to move a movable barrier such as a gate, comprising the step of accumulating excess energy coming from the motor during braking of the barrier in order to limit over-voltages inside the unit.

8. Method according to claim 7, wherein the motor is isolated from its power supply and the voltage across the motor is detected to determine the angular speed of the motor.

9. Method according to claim 7 or 8, wherein the motor is isolated from its power supply with a frequency which is greater the more slowly the motor is revolving.

10. Method according to claim 7 or 8 or 9, wherein the excess energy is accumulated in a capacitor and/or a battery.
